# EUROPÄISCHE PATENTSCHRIFT

(11) **EP 1 055 058 B1**
(45) Veröffentlichungstag und Bekanntmachung des Hinweises auf die Patenterteilung: **02.10.2002**
(21) Anmeldenummer: 99932517.8
(22) Anmeldetag: 01.02.1999
(51) Int. Cl.: F02D 41/22, F02D 41/24

(54) **VERFAHREN ZUR ERMITTLUNG EINER ZU BESTIMMENDEN BETRIEBSGRÖSSE EINES KRAFTFAHRZEUGES**
METHOD FOR ESTABLISHING AN OPERATING VARIABLE TO BE DETERMINED OF A MOTOR VEHICLE
PROCEDE POUR LA DETERMINATION D'UNE GRANDEUR DE FONCTIONNEMENT D'UN VEHICULE AUTOMOBILE

(30) Priorität: 11.02.1998 DE 19805368
(43) Veröffentlichungstag der Anmeldung: 29.11.2000
(73) Patentinhaber: Bayerische Motoren Werke Aktiengesellschaft, 80788 München (DE)
(72) Erfinder: EBELING, Karl-Heinz, D-81925 München (DE); KRÄMER, Gerd, D-82065 Baierbrunn (DE)
(86) Internationale Anmeldenummer: EP9900631
(87) Internationale Veröffentlichungsnummer: WO99041496

(56) Entgegenhaltungen:
- GB-A- 2 066 513
- US-A- 3 689 753
- US-A- 5 293 553
- PATENT ABSTRACTS OF JAPAN vol. 009, no. 172 (M-397), 17. Juli 1985 & JP 60 043142 A (MIKUNI KOGYO KK), 7. März 1985

## Beschreibung

Die Erfindung betrifft ein Verfahren zur Ermittlung einer zu bestimmenden Betriebsgröße eines Kraftfahrzeuges nach dem Oberbegriff des Patentanspruchs 1.

Ein derartiges. Verfahren ist insbesondere im Zusammenhang mit elektronischen Steuergeräten zur Ausführung von Brennkraftmaschinenfunktionen aus dem Fachbuch "Autoelektrik, Autoelektronik am Otto-Motor", Robert Bosch GmbH, 1994, bekannt. Beispielsweise wird in diesem Fachbuch auf Seite 163 (Bild 2) ein Kennfeld dargestellt, durch das der Zündwinkel in Abhängigkeit von der Drehzahl und der Last als bekannte Betriebsgrößen bestimmt wird. Auf Seite 165 (Bild 6) ist ein Kennfeld dargestellt, durch das der Schließwinkel für die Ansteuerung einer Zündspule in Abhängigkeit von der Drehzahl und der Batteriespannung als bekannte Betriebsgrößen bestimmt wird.

Grundsätzlich besteht die Oberfläche eines derartigen Kennfeldes im kartesischen Koordinatensystem (X-, Y-, Z-Achsen) aus einem Netz von Stützstellen, wobei jeweils vier Stützstellen ein rechteckiges Flächenelement im Raum bilden. Die Linien der rechteckigen Flächenelemente im Raum verlaufen parallel zur X- und Y-Achse. Um eine derartige regelmäßige Struktur der Stützstellen bzw. der aus Rechtecken bestehenden Oberfläche des Kennfeldes zu schaffen, können die Stützstellen bzw. die Kennfelddaten nur zum Teil auf realen Meßwerten basieren. Werden Meßwerte ermittelt, die nicht direkt den Stützstellen eines Kennfeldes entsprechen, werden die zugehörigen Werte in Z-Richtung mittels linearer Interpolation ermittelt.

Die für Kraftfahrzeugfunktionen notwendigen Kennfelder werden versuchstechnisch appliziert und in einem ohnehin vorhandenen elektronischen Steuergerät zur Brennkraftmaschinensteuerung abgespeichert. Für jede Abhängigkeit wird dabei ein Kennfeld abgelegt: Z = f (X, Y).

Üblicherweise wird die zu bestimmende Betriebsgröße der Z-Achse zugeordnet. Die der X-Achse und der Y-Achse jeweils zugeordnete Betriebsgröße sind erste und zweite bekannte Betriebsgrößen in Form von Eingangsgrößen, insbesondere Meßsignalen. Ein derartiges Kennfeld wird üblicherweise für eine definierte Kraftfahrzeugfunktion abgelegt. Häufig werden für weitere Kraftfahrzeugfunktionen zwar dieselben Betriebsgrößen verarbeitet, jedoch kann beispielsweise die der Z-Achse zugeordnete Betriebsgröße nunmehr bekannt sein, jedoch die der X-Achse oder der Y-Achse zugeordnete Betriebsgröße zu bestimmen sein; d. h. eine der Eingangsgrößen eines Kennfeldes kann zur Ausgangsgröße, die Ausgangsgröße eines Kennfeldes dagegen zur Eingangsgröße werden. Bei den Verfahren nach dem Stand der Technik wird für jeden dieser Fälle ein eigenes Kennfeld abgelegt, bei dem stets die zu bestimmende Betriebsgröße der Z-Achse zugeordnet wird. Hierdurch entsteht ein hoher Applikationsaufwand und ein immenser Speicherplatzverbrauch.

Es ist Aufgabe der Erfindung, ein Verfahren eingangs genannter Art derart zu verbessern, daß sowohl der Applikationsaufwand als auch der Speicherplatzbedarf reduziert werden.

Diese Aufgabe wird durch die kennzeichnenden Merkmale des Patentanspruchs 1 gelöst.

Eine vorteilhafte Weiterbildung der Erfindung ist der Gegenstand des abhängigen Anspruchs.

Erfindungswesentlich ist die Verwendung ein und desselben Kennfeldes unabhängig davon, welcher Achse des Koordinatensystems die Ausgangsgröße als zu bestimmende Betriebsgröße zugeordnet ist. Entspricht die zu bestimmende Betriebsgröße der der Z-Achse zugeordneten Betriebsgröße, wird wie üblich vorgegangen. Wird jedoch die der Z-Achse zugeordnete Betriebsgröße zur bekannten Betriebsgröße, findet eine Rückwärtsinterpolation des Kennfeldes statt. Voraussetzung hierfür ist eine mathematische Invertierbarkeit des Kennfeldes; d. h. das Kennfeld muß in X-Richtung und/oder in Y-Richtung monoton verlaufen.

Durch das erfindungsgemäße Verfahren reduziert sich auch die Fehlerwahrscheinlichkeit durch den geringer werdenden manuellen Aufwand.

In der Zeichnung ist ein Ausführungsbeispiel der Erfindung dargestellt. Es zeigt
- Fig. 1: die erfindungsgemäße Rückwärtsinterpolation am Beispiel zweier Flächenelemente eines Kennfeldes im Raum,
- Fig. 2: eine Kennfeldverwertung nach dem Stand der Technik,
- Fig. 3: zwei Kraftfahrzeugfunktionen mit unterschiedlichen Kennfeldern nach dem Stand der Technik und
- Fig. 4: zwei Kraftfahrzeugfunktionen mit ein und demselben Kennfeld durch Verwendung des erfindungsgemäßen Verfahrens.

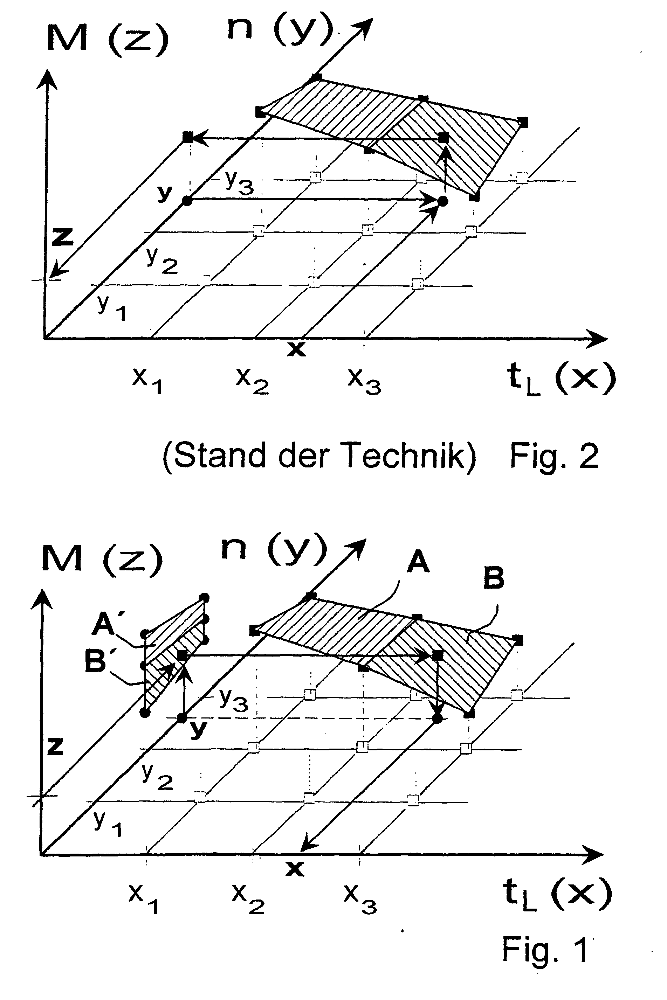

In den Fig. 1 bis 4 wird das erfindungsgemäße Verfahren im Vergleich mit dem Stand der Technik anhand eines Kennfeldes für Kraftfahrzeugfunktionen erläutert, die einer elektronischen Brennkraftmaschinensteuerung zugeordnet sind. In den Fig. 1 und 2 sind auf der X-Achse die Luftmasse t_{L}, auf der Y-Achse die Drehzahl n und auf der Z-Achse das Drehmoment M der Brennkraftmaschine aufgetragen. Durch die sechs Stützstellen x₁/y₂, x₁/y₃, x₂/y₂, x₂/y₃, x₃/y₂ und x₃/y₃ sind als Beispiele zwei Flächenelemente A und B eines Kennfeldes im Raum aufgespannt. Sind für eine erste Kraftfahrzeugfunktion die Luftmasse t_{L} und die Drehzahl n als Eingangssignale und damit als bekannte Betriebsgrößen definiert, wird in üblicher Weise, insbesondere wenn sich die Werte der bekannten Betriebsgrößen x und y zwischen den Stützstellen befinden durch lineare Interpolation, der Wert z des Drehmoments M als zu bestimmende Betriebsgröße ermittelt (vgl. Fig. 2).

Liegt ein Kennfeld nach Fig. 1 und Fig. 2 vor und ist für eine zweite Kraftfahrzeugfunktion das Drehmoment M bekannte Betriebsgröße, jedoch die Luftmasse t_{L} zu bestimmende Betriebsgröße, findet erfindungsgemäß eine Rückwärtsinterpolation gemäß Fig. 1 statt. Da der aus den Flächenelementen A und B bestimmte Kennfeldausschnitt in X-Richtung monoton fallend ist, ist das Kennfeld bezüglich der X-Achse mathematisch invertierbar. Zur Rückwärtsinterpolation werden die Flächenelemente A und B des Kennfeldes im Raum auf die durch die Y- und Z-Achse aufgespannte Ebene als Flächenelemente A' und B' projiziert. Durch die Werte **y** und **z** der bekannten Betriebsgrößen Drehzahl n und Drehmoment M ergibt sich ein Schnittpunkt ebenfalls in der durch die Y- und die Z-Achse aufgespannten Ebene. Es wird untersucht, in welchem projizierten Flächenelement A' oder B' sich dieser durch die Werte **y** und **z** ergebende Schnittpunkt, hier im Flächenelement B', befindet. Durch eine Rückübertragung des Flächenelements B' einschließlich dem Schnittpunkt in den Raum kann schließlich ermittelt werden, wo dieser Schnittpunkt auf dem Flächenelement B im Raum liegt. Über den nunmehr bekannten 0rt des Schnittpunkts im Raum kann wiederum durch lineare Interpolation auf bekannte Weise, wenn der Schnittpunkt nicht auf einer Stützstelle liegt, der diesem Schnittpunkt im Raum zugeordnete X-Wert der zu bestimmenden Betriebsgröße Luftmasse t_{L} ermittelt werden.

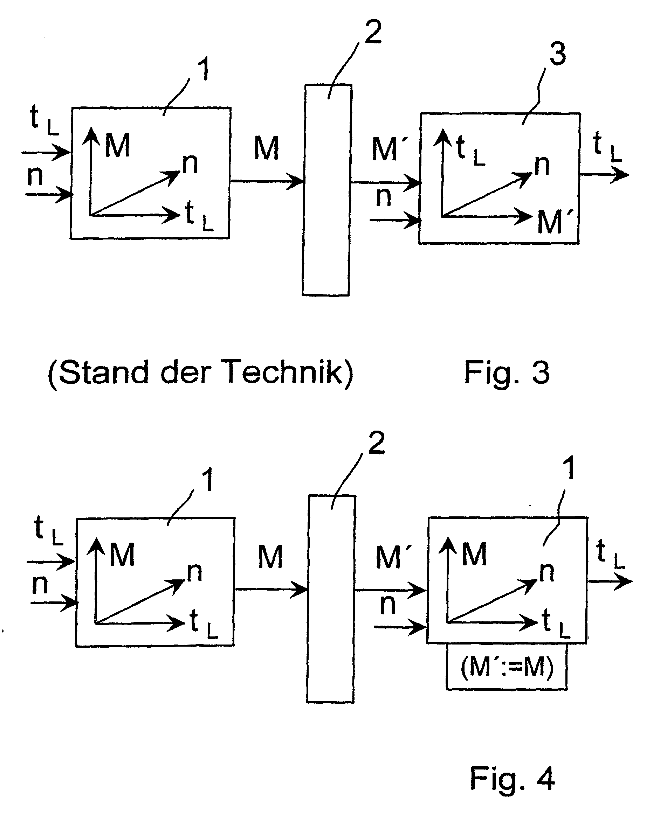

Im Beispiel nach dem Stand der Technik gemäß Fig. 3 sollen für eine erste Kraftfahrzeugfunktion die Luftmasse t_{L} und die Drehzahl n bekannte Betriebsgrößen sein und das Drehmoment M die zu bestimmende Betriebsgröße. Das Drehmoment M kann entsprechend dem Beispiel nach Fig. 2 in üblicher Weise aus dem ersten Kennfeld 1 ermittelt werden. Dieses ermittelte Drehmoment M kann in einem Momentenkoordinationsblock 2, z. B. durch die Veränderung des Momentenwunsches über die Betätigung des Fahrpedals, in einen neuen Wert M' verändert werden. In einer zweiten Kraftfahrzeugfunktion muß nunmehr die Luftmasse t_{L} abhängig von den jetzt bekannten Betriebsgrößen Drehzahl n und Drehmoment M' bestimmt werden. Nach dem Stand der Technik ist hierfür ein zweites Kennfeld 3 abgelegt, worin der Z-Achse die zu bestimmende Betriebsgröße Luftmasse t_{L} zugeordnet ist. Nach dem Stand der Technik sind demnach für zwei Kraftfahrzeugfunktionen, die jeweils mit zwei von drei gleichen Betriebsgrößen arbeiten, zwei unterschiedliche Kennfelder 1 und 3 erforderlich.

In Fig. 4 ist bezüglich der beiden Kraftfahrzeugfunktionen das gleiche Beispiel wie in Fig. 3 dargestellt. Im Unterschied zu Fig. 3 ist jedoch für die zweite Kraftfahrzeugfunktion dasselbe Kennfeld wie das erste Kennfeld 1 für die erste Kraftfahrzeugfunktion verwendbar. Das neue Drehmoment M' als Ausgangssignal des Momentenkoordinationsblocks 2 geht als Eingangssignal und bekannte Betriebsgröße Drehmoment M in das Kennfeld 1 ein. Die Bestimmung der Luftmasse t_{L} erfolgt anschließend wie im Zusammenhang mit Fig. 1 beschrieben.

Somit ist im Beispiel nach Fig. 4 anstelle von zwei Kennfeldern lediglich ein Kennfeld abzuspeichern, wodurch sowohl die Erstellung eines zweiten Kennfeldes als auch der Speicherplatzbedarf eines zweiten Kennfeldes eingespart werden.

## Patentansprüche

1. Verfahren zur Ermittlung einer zu bestimmenden Betriebsgröße (M; t_{L}) eines Kraftfahrzeuges in Abhängigkeit von einer ersten bekannten Betriebsgröße (n; M) und von einer zweiten bekannten Betriebsgröße (t_{L}; n) durch ein mittels Stützstellen im kartesischen Koordinatensystem (X-, Y-, Z-Achsen) in einem elektronischen Steuergerät abgespeichertes Kennfeld zur Ausführung von Kraftfahrzeugfunktionen, **dadurch gekennzeichnet, daß** bei Vorliegen eines mathematisch invertierbaren Kennfeldes, durch das für eine erste Kraftfahrzeugfunktion eine zu bestimmende Betriebsgröße (M) auf der Z-Achse aufgetragen ist, für eine zweite Kraftfahrzeugfunktion durch Rückwärtsinterpolation mittels desselben Kennfeldes auch eine der Y- oder X-Achse zugeordnete. Betriebsgröße (t_{L}) zu bestimmende Betriebsgröße ist, wenn für die zweite Kraftfahrzeugfunktion die der Z-Achse zugeordnete Betriebsgröße (M) bekannte Betriebsgröße ist.

2. Verfahren nach Patentanspruch 1, **dadurch gekennzeichnet, daß** zur Rückwärtsinterpolation die durch die Stützstellen gebildeten Flächenelemente (A, B) des Kennfeldes im Raum auf die durch die Z-Achse und durch die weitere Achse, der die zu bestimmende Betriebsgröße (t_{L}) nicht zugeordnet ist, aufgespannte Ebene projiziert werden und anschließend untersucht wird, in welchem projizierten Flächenelement sich der Schnittpunkt (y, z) der Werte der bekannten Betriebsgrößen (n, M) befindet und wo schließlich dieser Schnittpunkt in dem zugehörigen Flächenelement im Raum liegt.

## Claims

1. A method for establishing an operating variable (M; t_{L}) to be determined of a motor vehicle in dependency on a first known operating variable (n; M) and a second known operating variable (t_{L}; n) in a data map for the performance of motor vehicle functions stored in an electronic control unit by means of base positions in the Cartesian coordinate system (X-, Y-, Z-axes), **characterised in that** with the presence of a mathematically invertible data map, through which the operating variable (M) to be determined is entered as the first motor vehicle function on the Z-axis, as the second motor vehicle function by backwards interpolation using the same data map also assigned to the Y- or X- axis an operating variable (t_{L}) is to be determined, if for the second motor vehicle function is the known operating variable (M) assigned to the Z-axis.

2. A method according to Claim 1, **characterised in that** for backwards interpolation the surface elements (A, B) of the data map formed in space for the base positions of the plane set up on the Z-axis and the further axis, to which the operating variable (t_{L}) to be determined is not assigned, projected and then investigated, as to on which projected surface element the point of intersection (y, z) of the values of the known operating variables (n, M) is located and where finally this point of intersection lies in space on the associated surface element.

## Revendications

1. Procédé de détermination d'une grandeur de fonctionnement d'un véhicule automobile (M ; t_{L}) en fonction de deux grandeurs de fonctionnement connues, à savoir une première (n ; M) et une seconde (M ; n), en utilisant un champ de caractéristiques qui est prévu pour assurer des fonctions du véhicule et qui repose sur des points d'appui définis dans un système cartésien de coordonnées à trois axes X, Y, Z, ce champ étant mis en mémoire dans un appareil de commande,
**caractérisé en ce que**
si ce champ de caractéristiques peut être mathématiquement interverti, on porte sur l'axe des Z une grandeur de fonctionnement (M) à déterminer pour une première fonction du véhicule, et, pour une seconde fonction du véhicule, en opérant une rétro-interpolation utilisant le même champ de caractéristiques, également une valeur de fonctionnement (t_{L}) associée à un des axes X ou Y est la valeur de fonctionnement à déterminer si pour cette deuxième fonction du véhicule la grandeur de fonctionnement connue associée à l'axe des Z est la grandeur de fonctionnement (M).

2. Procédé selon la revendication 1,
**caractérisé en ce que**
pour effectuer la rétro-interpolation, les éléments de surface (A, B) définis dans l'espace par les points de soutien du champ de caractéristiques sont projetés sur le plan défini par l'axe des Z et par l'axe auquel n'est pas associée la grandeur de fonctionnement à déterminer (t_{L}), puis on recherche dans quel élément de surface projeté se trouve le point dont les coordonnées (y, z) sont les valeurs des grandeurs de fonctionnement connues (n ; M), et où enfin se trouve dans l'espace le point situé sur l'élément de surface correspondant et ayant ces mêmes coordonnées en projection.
